# EUROPÄISCHE PATENTSCHRIFT

(11) **EP 0 386 514 B1**
(45) Veröffentlichungstag und Bekanntmachung des Hinweises auf die Patenterteilung: **05.10.1994**
(21) Anmeldenummer: 90103179.9
(22) Anmeldetag: 20.02.1990
(51) Int. Cl.: C08L 23/08, C08L 23/16

(54) **Optische transparente Polymerlegierung und ihre Verwendung in Formmassen, Formteilen, Folien, Überzügen, Klebmitteln und lichtempfindlichen Aufzeichnungselementen**
Transparent polymer blend and its use in moulding compositions, articles, films, coatings, adhesives and in light-sensitive registration material
Mélange polymère transparent, et son application dans des masses de moulage, objets formés, revêtements, adhésifs et matériaux d'enregistrement photosensible

(30) Priorität: 25.02.1989 DE 3905947
(43) Veröffentlichungstag der Anmeldung: 12.09.1990
(73) Patentinhaber: BASF Aktiengesellschaft, 67063 Ludwigshafen (DE)
(72) Erfinder: Kurtz, Karl-Rudolf, Dr., D-6900 Heidelberg (DE); Koch, Horst, Dr., D-6718 Gruenstadt (DE); Telser, Thomas, Dr., D-6940 Weinheim (DE)

(56) Entgegenhaltungen:
- World Patents Index latest Week 8434, Derwent Publications Ltd, London, GB; AN 84-207856 & DE-A-3 304 580

## Beschreibung

Die vorliegende Erfindung betrifft eine neue optisch transparente Polymerlegierung aus mindestens zwei Elastomeren, welche beide Ethylen einpolymerisiert enthalten. Außerdem betrifft die vorliegende Erfindung die Verwendung dieser neuen optisch transparenten Polymerlegierung als Formmasse oder für die Herstellung von Formmassen, Formteilen, Folien, Überzügen, Klebmitteln und lichtempfindlichen Aufzeichnungselementen. Des weiteren betrifft die Erfindung ein neues lichtempfindliches Aufzeichnungselement für die Herstellung von Reliefdruckplatten, welches in seiner photopolymerisierbaren reliefbildenden Aufzeichnungsschicht die neue optisch transparente Polymerlegierung als Bindemittel enthält.

Elastomere, welche Ethylen und Propylen sowie gegebenenfalls Alkadiene einpolymerisiert enthalten sind bekannt und zum Teil im Handel erhältlich. Sie werden allgemein auch als "EPM"- oder als "EPDM"-Kautschuke bezeichnet. Aufgrund ihrer gesättigten Polymerhauptkette gleichen sie in mancher Hinsicht den paraffinischen Kohlenwasserstoffen, d.h. sie sind völlig oder weitgehend unpolar. Sie lassen sich deshalb auch nur schwer mit polaren oder weniger unpolaren funktionellen Zusatzstoffen wie radikalisch polymerisierbaren oder photopolymerisierbaren olefinisch ungesättigten Monomeren, Polymerisationsinitiatoren, Weichmachern oder Farbstoffen abmischen, weswegen diese funktionellen Zusatzstoffe nur in sehr geringen Mengen zugegeben werden können, weil sie ansonsten aufgrund ihrer Unverträglichkeit wieder aus den Elastomeren ausschwitzen. Dies hat zur Folge, daß die mechanischen Eigenschaften der Produkte, welche man aus diesen Mischungen hergestellt hat, oft nicht zufriedenstellend sind. Um die Verträglichkeit bzw. die Abmischbarkeit von polaren funktionellen Zusatzstoffen mit den Elastomeren zu erhöhen, wurden die Elastomere durch Maleinierung, Addition von mercaptogruppenhaltigen Carbonsäuren, Epoxidierung, Bromierung oder Chlorierung modifiziert. All diesen Methoden ist gemeinsam, daß sie die Polarität der Elastomeren auf ein Maß anheben sollen, welches die Einmischung polarer funktioneller Zusatzstoffe in ausreichender Menge erlaubt. Die Modifizierungsmethoden haben jedoch allesamt den Nachteil, daß sie neben der gewünschten Modifizierung auch die Bildung vernetzter Anteile zur Folge haben, welche sich bereits bei der Verarbeitung störend bemerkbar machen und letztlich zu mangelhaften Produkteigenschaften führen. Außerdem müssen zur Durchführung der genannten Modifizierungen zusätzliche Verfahrensschritte bei der Herstellung der Elastomeren durchgeführt werden, was zeitaufwendig und teuer und daher unwirtschaftlich ist.

Einen gewissen Fortschritt hat hier die Verwendung von Ethylen-Propylen-Alkadien-Terpolymerisaten eines Ethylengehalts von 40 bis 80 Gew.-% und eines Doppelbindungsanteils von 2 bis 20 olefinischen Doppelbindungen je 1000 Kohlenstoffatome mit sich gebracht. Wie in der am 09.08.89 veröffentlichten EP-A-0326977 beschrieben, lassen sich diese Terpolymerisate mit photopolymerisierbaren olefinisch ungesättigten Monomeren und Initiatoren der Photopolymerisation abmischen. Sie können daher zur Herstellung von photopolymerisierbaren reliefbildenden Aufzeichnungsschichten lichtempfindlicher Aufzeichnungsmaterialien verwendet werden. Allerdings lassen sich nicht alle bekannten photopolymerisierbaren olefinisch ungesättigten Monomeren mit diesen Terpolymerisaten in befriedigender Weise abmischen, sondern es muß eine enge Auswahl getroffen werden, wenn besonders gut geeignete photopolymerisierbare reliefbildende Aufzeichnungsschichten hergestellt werden sollen. Gleiches gilt für die Weichmacher, welche man zu diesen photopolymerisierbaren reliefbildenden Aufzeichnungsschichten hinzugibt.

Elastomere, welche Ethylen und (Meth)Acrylsäure einpolymerisiert enthalten, sind gleichfalls bekannt. Beispielhaft sei auf die DE-A-35 39 469, die GB-B-1 386 794, die DE-A-21 36 076 oder die EP-A-0 115 190 verwiesen. Bekanntermaßen können diese Elastomeren mit Epichlorhydrinkautschuken abgemischt und vulkanisiert werden (JP-A-59-129255). Wie aus der EP-A-0 293 750, der EP-A-0 223 114 und der EP-A-0 231 002 weiter hervorgeht, lassen sie sich vorzüglich als Bindemittel in photopolymerisierbaren reliefbildenden Aufzeichnungsschichten von lichtempfindlichen Aufzeichnungselementen verwenden.

Über ihre Abmischbarkeit oder Verträglichkeit mit Elastomeren, welche Ethylen und Propylen einpolymerisiert enthalten, ist bislang nichts bekannt geworden.

Formmassen, Formteile, Folien, Überzüge, Klebmittel und lichtempfindliche Aufzeichnungselemente, welche man unter Verwendung von Elastomeren, die Ethylen und Propylen einpolymerisiert enthalten, hergestellt hat, weisen zweifelsohne zahlreiche günstige Eigenschaften auf. So wird beispielsweise in der EP-A-0326977 beschrieben, daß die flexographischen Reliefdruckplatten, welche unter Verwendung von photopolymerisierbaren reliefbildenden Aufzeichnungsschichten mit Elastomeren der genannten Art als Bindemittel hergestellt wurden, besonders resistent gegenüber Essigester oder Ketone enthaltenden Flexodruckfarben sind. Es ist daher in hohem Maße wünschenswert, die Nachteile der Ethylen und Propylen einpolymerisiert enthaltenden Elastomeren auszuräumen, ohne daß ihre sonstigen vorteilhaften Eigenschaften verloren gehen, sondern im Gegenteil darüber hinaus noch ein besonderer technischer Effekt erzielt wird.

Demgemäß ist es die Aufgabe der vorliegenden Erfindung, die Abmischbarkeit von Elastomeren, welche Ethylen und Propylen einpolymerisiert enthalten, zu verbessern, so daß sie zum einen mit größeren Mengen und zum anderen mit einer höheren Anzahl unterschiedlicher funktioneller Zusatzstoffe abgemischt werden können.

Überraschenderweise konnte diese Aufgabe durch die Zugabe eines weiteren stofflich unterschiedlichen Elastomeren gelöst werden. Im Hinblick darauf, daß nur wenige Polymere soweit miteinander verträglich sind, daß sie nach ihrer Abmischung eine optisch transparente Polymerlegierung zu bilden vermögen, war die erfindungsgemäße Lösung der Aufgabe um so mehr überraschend.

Demgemäß handelt es sich bei dem Gegenstand der vorliegenden Erfindung um eine optisch transparente Polymerlegierung, enthaltend
A) mindestens ein Elastomer, welches Ethylen und Propylen einpolymerisiert enthält, und
B) mindestens ein Elastomer, welches Ethylen und (Meth)Acrylsäure einpolymerisiert enthält.
wobei das Elastomer (A) einen Gehalt an einpolymerisiertem Ethylen von 40 bis 80 Gew.-% hat, das Elastomer (B) aus
b₁) 30 bis 70 Gew.-% einpolymerisierten Ethylens,
b₂) 5 bis 40 Gew.-% einpolymerisierter (Meth)Acrylsäure und
b₃) 5 bis 50 Gew.-% mindestens eines einpolymerisierten Vinylesters, Vinylethers, (Meth)Acrylsäureesters und/oder (Meth)Acrylamids
besteht, und das Gewichtsverhältnis von Elastomer (A) zu Elastomer (B) bei 0,1 : 99,9 bis 99,9 : 0,1 liegt.

Ein weiterer Gegenstand der vorliegenden Erfindung ist die Verwendung der erfindungsgemäßen Polymerlegierung als Formmasse oder zur Herstellung von Formmassen, insbesondere hitzehärtbaren und lichthärtbaren Formmassen. Ein weiterer Gegenstand der vorliegenden Erfindung ist die Verwendung der erfindungsgemäßen Polymerlegierung für die Herstellung von Formteilen, Folien, Überzügen und Klebmitteln.

Ein weiterer Gegenstand der vorliegenden Erfindung ist insbesondere ein lichtempfindliches Aufzeichnungselement für die Herstellung von Reliefdruckplatten, welches eine photopolymerisierbare reliefbildende Aufzeichnungsschicht mit der erfindungsgemäßen Polymerlegierung als Bindemittel enthält.

Die erfindungsgemäße Polymerlegierung ist optisch transparent. Dies bedeutet, daß ihre Bestandteile soweit miteinander verträglich sind, daß sie sich ohne Trübungen oder Schlieren miteinander vermischen lassen und sich auch nicht nach ihrer Herstellung wieder entmischen.

Die erfindungsgemäße Polymerlegierung enthält entweder mindestens ein Elastomer (A) und mindestens ein Elastomer (B) oder sie besteht aus diesen beiden Bestandteilen. Unabhängig davon, ob die erfindungsgemäße Polymerlegierung aus diesen beiden Bestandteilen besteht oder diese beiden Bestandteile enthält, liegt das Gewichtsverhältnis von Elastomer (A) zu Elastomer (B) bei 0,1 : 99,9 bis 99,9 : 0,1, vorteilhafterweise 1 : 99 bis 99 : 1, insbesondere 5 : 95 bis 95 : 5. Innerhalb dieser überraschend breiten Bereiche kann das Gewichtsverhältnis der erfindungsgemäß zu verwendenden Elastomeren (A) und (B) in vorteilhafter Weise variiert und den jeweils vorliegenden technischen Problemen angepaßt und im Hinblick auf diese optimiert werden, ohne daß hierbei ein Verlust der optischen Transparenz der erfindungsgemäßen Polymerlegierung zu befürchten wäre.

Die erfindungsgemäße Polymerlegierung enthält als den einen wesentlichen Bestandteil mindestens ein Elastomer (A). Das erfindungsgemäß zu verwendende Elastomer (A) besteht entweder aus einpolymerisiertem Ethylen und einpolymerisiertem Propylen oder es enthält zusätzlich zu diesen einpolymerisierten Monomeren weitere Comonomere. Enthält das Elastomer (A) weitere Comonomere, so ist darauf zu achten, daß diese von einer solchen Art sind und in einer solchen Menge vorliegen, daß sie die elastomeren Eigenschaften nicht beeinträchtigen.

Geeignete Elastomere (A) haben einen Gehalt von einpolymerisiertem Ethylen von 40 bis 80 Gew.-%. Hierbei soll der Ethylengehalt 80 Gew.-% nicht überschreiten, weil ansonsten das betreffende Elastomer (A) wegen seiner physikalisch chemischen Eigenschaften weniger gut für den Aufbau der erfindungsgemäßen Polymerlegierung geeignet ist. Andererseits soll der Ethylengehalt 40 Gew.-% nicht unterschreiten, weil sich ansonsten auch hierbei weniger gute anwendungstechnische Eigenschaften des betreffenden Elastomeren (A) ergeben. Von Vorteil ist ein Ethylengehalt von 45 bis 75 Gew.-%, weil die Elastomeren (A) dieses Ethylengehalts besonders vorzüglich für die Herstellung der erfindungsgemäßen Polymerlegierung geeignet sind.

Gut geeignete Elastomere (A) enthalten mindestens ein einpolymerisiertes Alkadien. Geeignet sind alle Alkadiene, welche sich mit Ethylen und Propylen zu Terpolymerisaten nach den üblichen und bekannten Methoden der Ethylencopolymerisation umsetzen lassen. Hierbei sind konjugierte Alka-1,4-diene wie Buta-1,4-dien, Isopren, Penta-1,4-dien, Hexa-1,4-dien, Hepta-1,4-dien, Dicyclopentadien oder Ethylidennorbornen vorteilhaft und Dicyclopentadien, trans-Hexa-1,4-dien und Ethylidennorbornen ganz besonders vorteilhaft.

Die Einpolymerisation der Alkadiene, insbesondere der konjugierten Alka-1,4-diene, hat einen gewissen Anteil an olefinischen Doppelbindungen in dem erfindungsgemäß zu verwendenden Elastomeren (A) zur Folge. Hierbei weisen die besonders gut geeigneten Elastomeren (A), welche Alka-1,4-diene einpolymerisiert enthalten, einen Doppelbindungsanteil von 2 bis 20 olefinischen Doppelbindungen je 1000 Kohlenstoffatome auf. Die in den Elastomeren (A) enthaltenen olefinischen Doppelbindungen liegen dabei in der Hauptkette der Elastomere (A) vor. Der Doppelbindungsanteil der Elastomere (A) von zwei olefinischen Doppelbindungen je 1000 Kohlenstoffatome sollte nicht unterschritten werden, wenn die mit der Einpolymerisation der Alka-1,4-diene verbundenen Vorteile sich in zuverlässiger Weise einstellen sollen. Andererseits braucht der Doppelbindungsanteil 20 olefinische Doppelbindungen je 1000 Kohlenstoffatome nicht zu überschreiten, weil die hierdurch erzielten Vorteile unter Umständen durch unerwünschte Vernetzungsreaktionen der olefinischen Doppelbindungen in den Elastomeren (A) bei deren Verarbeitung wieder zum Teil verloren gehen. Demnach stellt der Bereich von 2 bis 20 olefinischen Doppelbindungen je 1000 Kohlenstoffatome ein Optimum dar, innerhalb dessen der Doppelbindungsanteil, den jeweiligen Anforderungen entsprechend, gezielt variiert werden kann. Innerhalb dieses optimalen Bereichs ist derjenige von 4 bis 15 olefinischen Doppelbindungen je 1000 Kohlenstoffatome hervorzuheben, weil hiermit ein ganz besonders vorteilhafter technischer Effekt erzielt wird.

Beispiele ganz besonders bevorzugter Elastomere (A) sind demnach
- Ethylen-Propylen-Dicyclopentadien-,
- Ethylen-Propylen-Ethylidennorbornen-,
- Ethylen-Propylen-trans-Hexa-1,4-dien-,
- Ethylen-Propylen-Dicyclopentadien-Ethylidennorbornen-,
- Ethylen-Propylen-Dicyclopentadien-trans-Hexa-1,4-dien-,
- Ethylen-Propylen-Ethylidennorbornen-trans-Hexa-1,4-dien- oder
- Ethylen-Propylen-Ethylidennorbornen-Dicyclopentadien-trans-Hexa-1,4-dien-Elastomere (A),
welche 45 bis 75 Gew.-% Ethylen und soviel der Alka-1,4-diene einpolymerisiert enthalten, daß sich ein Doppelbindungsanteil von 4 bis 15 olefinischen Doppelbindungen je 1000 Kohlenstoffatome ergibt.

Die vorstehend im Detail beschriebenen erfindungsgemäß zu verwendenden Elastomere (A) sind an sich bekannt und werden nach den üblichen und bekannten Verfahren der Ethylencopolymerisation hergestellt.

Der weitere wesentliche Bestandteil der erfindungsgemäßen Polymerlegierung ist mindestens ein Elastomer (B), welches Ethylen und (Meth)Acrylsäure einpolymerisiert enthält. Hierbei kann das erfindungsgemäß zu verwendende Elastomer (B) Acrylsäure oder Methacrylsäure oder Gemische aus diesen beiden Säuren einpolymerisiert enthalten. Außerdem kann das Elastomere (B) zusätzlich weitere Comonomere einpolymerisiert enthalten.

Beispiele für geeignete zusätzliche Comonomere sind Vinylester wie Vinylacetat, Vinylpropionat, Vinylbutyrat, Valeriansäurevinylester und Hexancarbonsäurevinylester; Vinylether wie Vinyl-1-propylether, Vinyl-1-butylether, Vinyl-2-butylether und Vinyl-1-pentylether; (Meth)acrylsäureester wie Methylacrylat, Methylmethacrylat, Ethylacrylat, Ethylmethacrylat, Propylacrylat, Propylmethacrylat, n-Butylacrylat, n-Butylmethacrylat, n-Pentylacrylat, n-Pentylmethacrylat, n-Hexylacrylat, n-Hexylmethacrylat, tert.-Butylacrylat, Cyclohexylacrylat, Cyclohexylmethacrylat, 2-Ethylhexylacrylat, 2-Ethylhexylmethacrylat, Dicyclopentadienylacrylat, ω-Methyl-poly(ethylenoxid)-α-yl-(meth)acrylat, ω-Methyl-poly(propylen-1,2-oxid)-α-yl-(meth)acrylat, ω-Methyl-poly(propylen-1,3-oxid)-α-yl-(meth)acrylat; und (Meth)Acrylamide wie N-Ethylacrylamid, N-Methyl-N-butylmeth-acrylamid und N-Ethyl-N-(2-ethylhexyl)-acrylamid. Von diesen sind Vinylacetat, Vinyl-1-butylether, n-Butylacrylat, 2-Ethylhexylacrylat, ω-Methyl-poly(ethylenoxid)-α-yl-acrylat und Dicyclopentadienylacrylat gut geeignet.

Die erfindungsgemäß zu verwendenden Elastomere (B), insbesondere diejenigen, welche die vorstehend genannten zusätzlichen Comonomere einpolymerisiert enthalten, können olefinisch ungesättigte und/oder polare Seitengruppen enthalten. Elastomere (B) dieser Art werden in den DE-A-36 02 472 (EP-A-0 231 002) beschrieben.

Außerdem können die Elastomeren (B), insbesondere diejenigen, welche die zusätzlichen Comonomere einpolymerisiert enthalten, als Addukte mit cyclischen und/oder acyclischen Aminen vorliegen. Elastomere dieser Art gehen aus der DE-A-37 18 447 (EP-A-0 293 750) hervor.

Desweiteren können die Elastomere (B) als Salze von Metallkationen oder als Hydraziniumsalze vorliegen.

Enthalten die Elastomere (B) die vorstehend genannten olefinisch ungesättigten und/oder polaren Seitengruppen, die cyclischen und/oder acyclischen Amine und/oder die Metall- oder Hydraziniumkationen, so ist deren Menge so zu wählen, daß die optische Transparenz der erfindungsgemäßen Polymerlegierung nicht beeinträchtigt wird.

Besonders gut geeignete Elastomere (B), welche zusätzliche Comonomere einpolymerisiert enthalten, bestehen aus 30 bis 70 Gew.-% an einpolymerisiertem Ethylen, 5 bis 40 Gew.-% an einpolymerisierter (Meth)Acrylsäure und 5 bis 50 Gew.-% an mindestens einem der vorstehend genannten zusätzlichen Comonomeren.

Beispiele für ganz besonders gut geeignete Elastomere (B) sind diejenigen, welche Ethylen und (Meth)Acrylsäure sowie zusätzlich n-Butylacrylat, 2-Ethylhexylacrylat und/oder ω-Methyl-poly(ethylenoxid)-α-yl-acrylat in den vorstehend angegebenen Mengen einpolymerisiert enthalten.

Die erfindungsgemäß zu verwendenden Elastomere (B) sind an sich bekannt und können nach der LDPE (= low density polyethylene)-Hochdruckpolymerisationsmethode bei Temperaturen von 200 bis 400°C und einem Druck von mehr als 800 kg/cm² (vgl. die DE-B-23 41 462, die US-A-3 264 272 oder die DE-A-35 39 469) hergestellt werden.

Methodisch gesehen bietet die Herstellung der erfindungsgemäßen optisch transparenten Polymerlegierung keine Besonderheiten, sondern erfolgt nach den üblichen und bekannten Methoden der Herstellung von Polymermischungen unter Verwendung der üblichen und bekannten Misch-, Knet-, Extrusions- und Lösungstechniken.

Die erfindungsgemäße optisch transparente Polymerlegierung weist zahlreiche besondere Vorteile auf.

So läßt sie sich in einfacher Weise herstellen und direkt als Formmasse verwenden. Insbesondere aber kann sie mit einer Vielzahl völlig unterschiedlicher funktioneller Zusatzstoffe auch in großen Mengen abgemischt werden, ohne daß hierbei die optische Transparenz der erfindungsgemäßen Polymerlegierung verloren geht. Ein weiterer zusätzlicher Vorteil ist, daß die eingemischten funktionellen Zusatzstoffe sich auch im Laufe der Zeit nicht wieder entmischen. Die erfindungsgemäße optisch transparente Polymerlegierung hat daher eine Anwendungsbreite, welche im Hinblick auf die eingangs erwähnten Nachteile der Elastomeren (A) als nicht möglich erachtet wurde. Die erfindungsgemäße optisch transparente Polymerlegierung eignet sich deshalb hervorragend für die Herstellung von Formmassen, insbesondere von hitzehärtbaren und lichthärtbaren Formmassen. Außerdem ist die erfindungsgemäße optisch transparente Polymerlegierung ausgezeichnet für die Herstellung von licht- oder hitzehärtbaren Klebmitteln geeignet. Darüber hinaus eignet sie sich für die Herstellung von Formteilen, Folien und Überzügen, welche insbesondere optisch transparent, elastisch und resistent gegenüber chemischen und physikalischen Einflüssen sind.

Beispiele geeigneter funktioneller Zusatzstoffe, welche in vorteilhafter Weise mit der erfindungsgemäßen optisch transparenten Polymerlegierung abgemischt werden können, sind übliche und bekannte Weichmacher, radikalisch polymerisierbare olefinisch ungesättigte Monomere, photopolymerisierbare olefinisch ungesättigte Monomere, Initiatoren der thermisch initiierten radikalischen Polymerisation, Photopolymerisationsinitiatoren, Inhibitoren der thermisch initiierten Polymerisation, Farbstoffe, Pigmente, sensitometrische Regler, Vernetzungshilfsmittel, klebrig machende Mittel, Antioxidantien, Antiozonatien, Füllstoffe, Verstärkerfüllstoffe, Flußmittel oder Formtrennmittel. Sie werden der erfindungsgemäßen optisch transparenten Polymerlegierung in wirksamen Mengen zugesetzt, wobei sich ihre Auswahl nach dem Verwendungszweck des resultierenden Gemischs mit der erfindungsgemäßen optisch transparenten Polymerlegierung richtet.

Ein Beispiel für einen Verwendungszweck, für welchen die genannten optisch transparenten Formmassen besonders hervorragend geeignet sind, ist die Herstellung der photopolymerisierbaren reliefbildenden Aufzeichnungsschicht von lichtempfindlichen Aufzeichnungselementen, die vor allem der Herstellung von Reliefdruckplatten, insbesondere flexographischen Reliefdruckplatten, dienen. Hierzu wird die erfindungsgemäße optisch transparente Polymerlegierung mit den funktionellen Zusatzstoffen, wie sie für diesen Verwendungszweck üblich und bekannt sind, abgemischt und zu der photopolymerisierbaren reliefbildenden Aufzeichnungsschicht geformt, wonach diese bildmäßig belichtet und anschließend mit einem geeigneten Entwicklerlösungsmittel entwickelt wird. Hierbei können die in der EP-A-0326977, der DE-A-37 18 447 (EP-A-0 293 750), der DE-A-35 40 950 (EP-A-0 223 114), der DE-A-36 02 472 (EP-A-0 231 002), der DE-A-29 42 183, der DE-A-21 38 582 oder der DE-A-24 56 439 angegebenen funktionellen Verbindungen in den dort beschriebenen Mengen zusammen mit den sonstigen üblichen und bekannten Bestandteilen eines lichtempfindlichen Aufzeichnungselements wie dimensionsstabilen Trägern, weichelastischen Unterschichten, Haftlackschichten, Zwischenschichten, Deckschichten oder Deckfolien verwendet werden. Die hierbei erhaltenen flexographischen Reliefdruckplatten weisen Vorteile auf, welche unmittelbar auf die Verwendung der erfindungsgemäßen optisch transparenten Polymerlegierung zurückzuführen sind wie eine hohe Resistenz gegenüber Essigester oder Ketone enthaltenden Druckfarbenlösungsmitteln und Ozon, eine vorzügliche Elastizität und Abriebfestigkeit sowie eine ausgezeichnete Wiedergabequalität.

### Beispiele und Vergleichsversuche

### Beispiele 1 bis 3

### Herstellung erfindungsgemäßer optisch transparenter Polymerlegierungen; Versuchsvorschrift:

Für die Durchführung der Beispiele 1 bis 3 wurden jeweils 100 g des EPDM-Kautschuks Buna® AP 251 der Fa. Hüls GmbH (Ethylengehalt: 50 Gew.-%; Doppelbindungsanteil: 14 Doppelbindungen je 1000 Kohlenstoffatome; Elastomer A) in jeweils 300 g Toluol gelöst. Zu diesen drei Lösungen wurden bei Beispiel 1 5 g, bei Beispiel 2 10 g und bei Beispiel 3 20 g des Ethylen-Acrylsäure-ω-Methyl-poly(ethylenoxid)-α-yl-acrylat-Elastomeren (B) gemäß dem Beispiel 1 der DE-A-35 39 469 hinzugegeben. Die drei homogenen Lösungen wurden auf Polyethylenterephthalatfolien mit Hilfe eines Handgießers ausgegossen. Die hieraus resultierenden Naßschichten ergaben nach sechsstündiger Trocknung bei 70°C klare elastische Filme von einwandfreier Beschaffenheit.

### Beispiele 4 bis 6

### Herstellung erfindungsgemäßer optisch transparenter Polymerlegierungen; Versuchsvorschrift:

Die Beispiele 1 bis 3 wurden wiederholt, nur daß anstelle des vorstehend angegebenen Elastomeren (B) das mit Glycidylmethacrylat polymeranalog modifizierte Ethylen-Acrylsäure-n-Butylacrylat-Elastomere (B) gemäß Beispiel 1 der DE-A-36 02 472 (EP-A-0 231 002) verwendet wurde. Die hierbei erhaltenen Filme waren klar, elastisch und einwandfrei ausgebildet.

### Beispiele 7 bis 12

### Herstellung erfindungsgemäßer optisch transparenter Polymerlegierungen; Versuchsvorschrift:

Die in den Beispielen 1 bis 6 angegebenen Mengen an Elastomeren (A) und (B) wurden ohne Lösungsmittel bei 120°C unter Zugabe von jeweils 0,5 g tert.-Butyl-p-kresol (Inhibitor der thermisch initiierten radikalischen Polymerisation oder Vernetzung) in einem Kneter (Brabender) vermischt und im Anschluß daran zu flächigen, 0,7 mm dicken Platten gepreßt. Alle diese Platten waren völlig klar, elastisch und von einwandfreier Oberflächenbeschaffenheit.

### Vergleichsversuche V1 und V2

### Herstellung nicht erfindungsgemäßer Polymerlegierungen; Versuchsvorschrift:

Für die Durchführung der Vergleichsversuche V1 und V2 wurden jeweils 100 g des bei den vorangegangenen Beispielen 1 bis 12 verwendeten Elastomeren (A) (Buna® AP 251 der Fa. Hüls GmbH) in 300 g Toluol gelöst. Die resultierenden Lösungen wurden bei Vergleichsversuch V1 mit 10 g des EPDM-Kautschuks Buna® AP 447 der Fa. Hüls GmbH (Ethylengehalt: 70 Gew.-%; Doppelbindungsanteil: 8 Doppelbindungen je 1000 Kohlenstoffatome; Elastomer A) und bei Vergleichsversuch V2 mit 10 g eines üblichen und bekannten Styrol/Isopren/(Styrol, Butadien)-Dreiblockmischpolymerisats versetzt. Die resultierenden Lösungen wurden auf Polyethylenterephthalatfolien mit Hilfe eines Handgießers ausgegossen. Nach sechsstündigem Trocknen der hierbei erhaltenen Naßschichten wurden nur trübe, mit Oberflächenfehlern behaftete Filme ungleicher Dicke und inhomogener Zusammensetzung erhalten, welche sowohl für optische Zwecke als auch für übliche Anwendungen von Elastomeren (A) völlig unbrauchbar waren. Hierbei war es insbesondere überraschend, daß selbst die chemisch nahe verwandten Elastomeren (A), von denen jedes mit den Elastomeren (B) die erfindungsgemäßen optisch transparenten Polymerlegierungen zu bilden vermag, miteinander praktisch unverträglich waren.

### Beispiel 13

### Herstellung einer erfindungsgemäßen optisch transparenten hitzehärtbaren Formmasse; Versuchsvorschrift:

Eine Mischung aus 90 g des Elastomeren (A) gemäß den Beispielen 1 bis 3 und 10 g des Elastomeren (B) gemäß den Beispielen 1 bis 3, 10 g Hexan-1,6-diol-diacrylat und 2 g Dicumylperoxid wurden in 300 g Toluol gelöst und mit Hilfe einer Handgießmaschine auf eine Polyethylenterephthalatfolie aufgebracht. Nach dem Trocknen der Naßschicht wurde ein hitzehärtbarer Film erhalten, aus welchem selbst nach einem Zeitraum von drei Monaten keine Bestandteile ausgeschwitzt waren und welcher daher an seiner Oberfläche völlig trocken blieb. Nach 15 minütigem Tempern des Films bei 160°C wurde eine gleichmäßig elastische Platte erhalten, welche sich ohne Materialversagen biegen ließ.

### Vergleichsversuch V3

### Herstellung einer nicht erfindungsgemäßen hitzehärtbaren Formmasse; Versuchsvorschrift:

Beispiel 13 wurde wiederholt, nur daß die Zugabe des Elastomeren (B) unterblieb. Der hitzehärtbare Film dieses Vergleichsversuchs wies an seiner Oberfläche einen Feuchtigkeitsfilm auf, bei dem es sich laut IR-spektroskopischen Untersuchungen um ausgeschwitztes Hexan-1,6-diol-diacrylat handelte. Außerdem hatte der Film keine Haftung an der Polyethylenterephthalatfolie. Nach 15minütigem Tempern des Films bei 160°C wurde eine Platte erhalten, bei deren Biegen sich in der Oberfläche feine Risse bildeten, welche sich in das darunter liegende elastischere Material fortsetzten. Dies belegte, daß die in dieser Weise erhaltene Platte weder stofflich homogen noch gleichmäßig elastisch war.

### Beispiele 14

### Herstellung eines erfindungsgemäßen lichtempfindlichen Aufzeichnungselements und seine Weiterverarbeitung zu einer flexographischen Reliefdruckplatte; Versuchsvorschrift:

Eine Mischung aus 80 g des Elastomeren (A) der Beispiele 1 bis 3, 12,5 g Dihydrodicyclopentadienylacrylat, 4 g Dioctyladipat (Plastomoll® DOA), 3 g Benzildimethylacetal, 1 g tert.-Butyl-p-kresol, 5 g des Elastomeren (B) der Beispiele 1 bis 3, 0,005 g Rhodamin B (C.I. 45170), 0,01 g Duasyn Basisch Rot (C.I. 50240) und 0,25 g des Kaliumsalzes von N-Nitrosocyclohexylhydroxylamin wurden in 130 ml einer Mischung aus Toluol und Tetrahydrofuran im Volumenverhältnis von 5,5 : 1 gelöst, und die resultierende Lösung wurde auf eine 75 µm starke, mit einem alkohollöslichen Polyamid beschichtete Polyethylenterephthalatfolie aufgebracht. Nach dem Trocknen der Naßschicht wurde eine 700 µm starke erfindungsgemäße photopolymerisierbare reliefbildende Aufzeichnungsschicht erhalten, welche mit ihrer freien Seite auf eine 125 µm starke, mit einem Polyurethanhaftlack beschichtete Polyethylenterephthalatfolie kaschiert wurde. Hiernach wurde die Polyethylenterephthalatfolie von der alkohollöslichen Polyamidschicht, welche auf der photopolymerisierbaren reliefbildenden Aufzeichnungsschicht verblieb, entfernt. Hiernach wurde auf die Polyamidschicht ein Standardnegativ aufgelegt, durch welches hindurch die photopolymerisierbare reliefbildende Aufzeichnungsschicht mit aktinischem Licht bildmäßig belichtet wurde. Im Anschluß an die bildmäßige Belichtung wurden die unbelichteten und daher nicht photopolymerisierten Bereiche der bildmäßig belichteten reliefbildenden Aufzeichnungsschicht mit Perchlorethylen in einem Bürstenrundwascher entwickelt, hiernach getrocknet und dann mit aktinischem Licht nachbelichtet.

Hierbei wurde eine flexographische Reliefdruckplatte mit einer Reliefschicht erhalten, welche exakt den transparenten Bereichen des Standardnegativs entsprach und sehr gute Zwischentiefen aufwies. Die flexographische Reliefdruckplatte wurde auf einen Druckzylinder aufgespannt und in einem Flexodruckwerk für den Flexoendlosdruck mit Essigester enthaltenden Flexodruckfarben verwendet. Hierbei zeichnete sich die flexographische Reliefdruckplatte durch eine hohe Auflagenfestigkeit auf.

### Beispiele 15

### Die Herstellung eines erfindungsgemäßen lichtempfindlichen Aufzeichnungselements und seine Weiterverarbeitung zu einer flexographischen Reliefdruckplatte; Versuchsvorschrift:

Eine Mischung aus 80 g des Elastomeren (B) der Beispiele 4 bis 6, 3,5 g N-Butyl-N-(2-hydroxyethyl)-amin, 5,5 g Dihydrodicyclopentadienylacrylat, 11 g des Elastomeren (A) der Beispiele 1 bis 3, 1 g Benzildimethylacetal, 0,5 g tert.-Butyl-p-kresol, 1 g des Kaliumsalzes von N-Nitrosocyclohexylhydroxylamin, 0,02 g Duasyn® Basisch Rot (C.I. 50240), 0,006 g Basazol Rot 71 P (C.I. 45170) wurden in 100 g Toluol gelöst und entsprechend der im Beispiel 14 angegebenen Vorschrift zu einem lichtempfindlichen Aufzeichnungselement verarbeitet, welches nach der in dem Beispiel 14 angegebenen Vorschrift bildmäßig belichtet wurde. Im Anschluß an die bildmäßige Belichtung wurde das lichtempfindliche Aufzeichnungselement mit 1 %iger wäßriger Sodalösung entwickelt, hiernach getrocknet und dann mit aktinischem Licht nachbelichtet. Bei der Herstellung der flexographischen Reliefdruckplatte zeigte es sich, daß die photopolymerisierbare reliefbildende Aufzeichnungsschicht des lichtempfindlichen Aufzeichnungselements hervorragende Belichtungseigenschaften aufwies. Die Reliefschicht der flexographischen Reliefdruckplatte wies in einem Druckfarbenlösungsmittelgemisch aus Ethanol und Essigester im Volumenverhältnis von 7 : 3 lediglich eine Gewichtszunahme von 7,8 Gew.-% auf. Die flexographische Reliefdruckplatte wurde, wie bei Beispiel 14 beschrieben, für den Flexoendlosdruck verwendet. Hierbei lieferte sie eine Auflage exzellenter kontrastreicher Druckerzeugnisse von über 250 000.

## Patentansprüche

1. Optisch transparente Polymerlegierung, enthaltend
A) mindestens ein Elastomer, welches Ethylen und Propylen einpolymerisiert enthält, und
B) mindestens ein Elastomer, welches Ethylen und (Meth)Acrylsäure einpolymerisiert enthält,
wobei das Elastomer (A) einen Gehalt an einpolymerisiertem Ethylen von 40 bis 80 Gew.-% hat, das Elastomer (B) aus
b₁) 30 bis 70 Gew.-% einpolymerisierten Ethylens,
b₂) 5 bis 40 Gew.-% einpolymerisierter (Meth)Acrylsäure und
b₃) 5 bis 50 Gew.-% mindestens eines einpolymerisierten Vinylesters, Vinylethers, (Meth)Acrylsäureesters und/oder (Meth)Acrylamids
besteht, und das Gewichtsverhältnis von Elastomer (A) zu Elastomer (B) bei 0,1 : 99,9 bis 99,9 : 0,1 liegt.

2. Optisch transparente Polymerlegierung nach Anspruch 1, dadurch gekennzeichnet, daß das Elastomer (A) Alkadiene einpolymerisiert enthält.

3. Optisch transparente Polymerlegierung nach Anspruch 2, dadurch gekennzeichnet, daß das Elastomer (A) einen Doppelbindungsanteil von 2 bis 20 olefinischen Doppelbindungen je 1000 Kohlenstoffatome hat.

4. Optisch transparente Polymerlegierung nach einem der Ansprüche 1 - 3, dadurch gekennzeichnet, daß das Elastomer (B) Seitengruppen enthält, welche olefinisch ungesättigte und/oder polare Gruppen aufweisen.

5. Verwendung der optisch transparenten Polymerlegierung gemäß einem der Ansprüche 1 bis 4 als Formmasse oder zur Herstellung von Formmassen.

6. Verwendung der optisch transparenten Polymerlegierung gemäß einem der Ansprüche 1 bis 4 für die Herstellung von Formteilen, Folien, Überzügen und Klebmitteln.

7. Verwendung der optisch transparenten Polymerlegierung gemäß einem der Ansprüche 1 bis 4 für die Herstellung von hitzehärtbaren Formmassen und Klebmitteln.

8. Verwendung der optisch transparenten Polymerlegierung gemäß einem der Ansprüche 1 bis 4 für die Herstellung von lichthärtbaren Formmassen und Klebmitteln.

9. Verwendung der optisch transparenten Polymerlegierung gemäß einem der Ansprüche 1 bis 4 für die Herstellung von lichtempfindlichen Aufzeichnungselementen.

10. Formmassen, Formteile, Folien und Überzüge, welche aus der optisch transparenten Polymerlegierung gemäß einem der Ansprüche 1 bis 4 bestehen.

11. Formmassen, Formteile, Folien, Überzüge und Klebmittel, welche die optisch transparente Polymerlegierung gemäß einem der Ansprüche 1 bis 4 enthalten.

12. Hitzehärtbare Formmassen und Klebmittel, welche mindestens ein polymeres Bindemittel, mindestens ein radikalisch polymerisierbares olefinisch ungesättigtes Monomeres und mindestens einen Initiator der thermischen radikalischen Polymerisation enthalten, dadurch gekennzeichnet, daß das Bindemittel eine optisch transparente Polymerlegierung gemäß einem der Ansprüche 1 bis 4 ist.

13. Lichthärtbare Formmassen und Klebmittel, welche mindestens ein polymeres Bindemittel, mindestens ein photopolymerisierbares olefinisch ungesättigtes Monomeres und mindestens einen Photopolymerisationsinitiator enthalten, dadurch gekennzeichnet, daß das Bindemittel eine optisch transparente Polymerlegierung gemäß einem der Ansprüche 1 bis 4 ist.

14. Lichtempfindliches Aufzeichnungselement für die Herstellung von Reliefdruckplatten, enthaltend einen dimensionsstabilen Träger und eine photopolymerisierbare reliefbildende Aufzeichnungsschicht mit mindestens einem polymeren Bindemittel, mindestens einem photopolymerisierbaren olefinisch ungesättigten Monomeren und mindestens einem Photopolymerisationsinitiator, dadurch gekennzeichnet, daß das Bindemittel eine optisch transparente Polymerlegierung gemäß einem der Ansprüche 1 bis 4 ist.

## Claims

1. An optically transparent polymer alloy containing
A) at least one elastomer which contains ethylene and propylene as copolymerized units and
B) at least one elastomer which contains ethylene and (meth)acrylic acid as copolymerized units,
in which the elastomer (A) contains from 40 to 80% by weight of copolymerized ethylene, the elastomer (B) consists of
b₁) from 30 to 70% by weight of copolymerized ethylene,
b₂) from 5 to 40% by weight of copolymerized (meth)acrylic acid, and
b₃ from 5 to 50% by weight of at least one copolymerized vinyl ester, vinyl ether, (meth)acrylate and/or (meth)acrylamide,
and the weight ratio of elastomer (A) to elastomer (B) is from 0.1 : 99.9 to 99.9 : 0.1.

2. An optically transparent polymer alloy as claimed in claim 1, wherein the elastomer (A) contains copolymerized alkadienes.

3. An optically transparent polymer alloy as claimed in claim 2, wherein the elastomer (A) has a double bond content of from 2 to 20 olefinic double bonds per 1,000 carbon atoms.

4. An optically transparent polymer alloy as claimed in any of claims 1 - 3, wherein the elastomer (B) contains side groups which have olefinically unsaturated and/or polar groups.

5. Use of an optically transparent polymer alloy as claimed in any of claims 1 to 4 as a molding material or for the production of molding materials.

6. Use of an optically transparent polymer alloy as claimed in any of claims 1 to 4 for the production of moldings, films, coatings and adhesives.

7. Use of an optically transparent polymer alloy as claimed in any of claims 1 to 4 for the production of heat-curable molding materials and adhesives.

8. Use of an optically transparent polymer alloy as claimed in any of claims 1 to 4 for the production of photocurable moldings and adhesives.

9. Use of an optically transparent polymer alloy as claimed in any of claims 1 to 4 for the production of photosensitive recording elements.

10. A molding material, molding, film or coating, consisting of the optically transparent polymer alloy as claimed in any of claims 1 to 4.

11. A molding material, molding, film, coating or adhesive, containing the optically transparent polymer alloy as claimed in any of claims 1 to 4.

12. A heat-curable molding material or adhesive, containing at least one polymeric binder, at least one olefinically unsaturated monomer which can be subjected to free radical polymerization and at least one initiator of free radical thermal polymerization, wherein the binder is an optically transparent polymer alloy as claimed in any of claims 1 to 4.

13. A photocurable molding material or adhesive, containing at least one polymeric binder, at least one photopolymerizable olefinically unsaturated monomer and at least one photopolymerization initiator, wherein the binder is an optically transparent polymer alloy as claimed in any of claims 1 to 4.

14. A photosensitive recording element for the production of relief printing plates, containing a dimensionally stable substrate and a photopolymerizable relief-forming recording layer having at least one polymeric binder, at least one photopolymerizable olefinically unsaturated monomer and at least one photopolymerization initiator, wherein the binder is an optically transparent polymer alloy as claimed in any of claims 1 to 4.

## Revendications

1. Alliage de polymères optiquement transparent, contenant
A) au moins un élastomère qui contient lui-même de l'éthylène et du propylène à l'état polymérisé, et
B) au moins un élastomère qui contient lui-même de l'éthylène et de l'acide (méth)acrylique à l'état polymérisé,
l'élastomère A) contenant de 40 à 80 % en poids d'éthylène à l'état polymérisé,
l'élastomère B) consistant en
b1) 30 à 70 % en poids d'éthylène à l'état polymérisé,
b2) 5 à 40 % en poids d'acide (méth)acrylique à l'état polymérisé et
b3) 5 à 50 % en poids d'au moins un ester vinylique, un éther vinylique, un ester (méth)acrylique et/ou un (méth)acrylamide à l'état polymérisé,
et les proportions relatives en poids entre l'élastomère A) et l'élastomère B) allant de 0,1 : 99,9 à 99,9 : 0,1.

2. Alliage de polymères optiquement transparent selon la revendication 1, caractérisé en ce que l'élastomère A) contient des alcadiènes à l'état polymérisé.

3. Alliage de polymères optiquement transparent selon la revendication 2, caractérisé en ce que l'élastomère A) contient de 2 à 20 doubles liaisons oléfiniques pour 1000 atomes de carbone.

4. Alliage de polymères optiquement transparent selon une des revendications 1 à 3, caractérisé en ce que l'élastomère B) porte des groupes latéraux qui contiennent eux-mêmes des groupes à insaturation oléfinique et/ou polaires.

5. Utilisation d'alliage de polymères optiquement transparent selon une des revendications 1 à 4 en tant que matière à mouler ou pour la préparation de matières à mouler.

6. Utilisation d'alliage de polymères optiquement transparent selon une des revendications 1 à 4 pour la fabrication de pièces moulées ou de feuilles, l'application de revêtements et la préparation de colles.

7. Utilisation d'alliage de polymères optiquement transparent selon une des revendications 1 à 4 pour la fabrication de matières à mouler et colles thermodurcissables.

8. Utilisation d'alliage de polymères optiquement transparent selon une des revendications 1 à 4 pour la fabrication de matières à mouler et colles durcissables sous l'action de la lumière.

9. Utilisation d'alliage de polymères optiquement transparent selon une des revendications 1 à 4 pour la fabrication d'éléments d'enregistrement photosensibles.

10. Matières à mouler, pièces moulées, feuilles et revêtements consistant en l'alliage de polymères optiquement transparent selon une des revendications 1 à 4.

11. Matières à mouler, pièces moulées, feuilles, revêtements et colles contenant l'alliage de polymères optiquement transparent selon une des revendications 1 à 4.

12. Matières à mouler et colles thermodurcissables contenant au moins un liant polymère, au moins un monomère à insaturation oléfinique apte à la polymérisation radicalaire et au moins un inducteur de la polymérisation radicalaire à la chaleur, caractérisées en ce que le liant est un alliage de polymères optiquement transparent selon une des revendications 1 à 4.

13. Matières à mouler et colles durcissables sous l'action de la lumière, qui contiennent au moins un liant polymère, au moins un monomère à insaturation oléfinique photopolymérisable et au moins un inducteur de photopolymérisation, caractérisées en ce que le liant est un alliage de polymères optiquement transparent selon une des revendications 1 à 4.

14. Elément d'enregistrement photosensibles pour la fabrication de plaques d'impression en relief, contenant un support à dimensions stables et une couche d'enregistrement photopolymérisable formant le relief, à au moins un liant polymère, au moins un monomère à insaturation oléfinique photopolymérisable et au moins un inducteur de photopolymérisation, caractérisé en ce que le liant est un alliage de polymères optiquement transparent selon une des revendications 1 à 4.
